# EUROPÄISCHE PATENTSCHRIFT

(11) **EP 3 022 472 B1**
(45) Veröffentlichungstag und Bekanntmachung des Hinweises auf die Patenterteilung: **03.10.2018**
(21) Anmeldenummer: 14737248.6
(22) Anmeldetag: 09.07.2014
(51) Int. Cl.: F16K 11/044

(54) **SANITÄRES UMSTELLVENTIL**
SANITARY REVERSING VALVE
SOUPAPE D'INVERSION SANITAIRE

(30) Priorität: 17.07.2013 DE 102013213999
(43) Veröffentlichungstag der Anmeldung: 25.05.2016
(73) Patentinhaber: Hansgrohe SE, 77761 Schiltach (DE)
(72) Erfinder: GROSS, Jürgen, 77796 Mühlenbach (DE); HAHN, Arno, 77761 Schiltach (DE); KING, Jürgen, 78730 Lauterbach (DE); MEIER, Fridolin, 77716 Haslach (DE)
(74) Vertreter: Patentanwälte Ruff, Wilhelm, Beier, Dauster & Partner mbB
(86) Internationale Anmeldenummer: PCT/EP2014/064704
(87) Internationale Veröffentlichungsnummer: WO 2015/007590

(56) Entgegenhaltungen:
- EP-A1- 1 072 833
- WO-A1-2007/048525
- WO-A1-2011/155907
- DE-A1- 4 105 166
- DE-A1- 19 542 748
- DE-U- 7 242 544
- DE-U1- 29 608 014
- US-A1- 2006 208 209

## Beschreibung

Die Erfindung bezieht sich auf ein sanitäres Umstellventil mit einer axial zwischen einer ersten und einer zweiten Endstellung handbetätigbar beweglichen Ventilstange, an der ein Ventilkörper angeordnet ist, und einem Sanitärwasser-Ventilraum, der einen an eine Sanitärwasserversorgung anzuschließenden Ventileinlass sowie einen ersten und einen zweiten Ventilauslass aufweist, die strömungstechnisch parallel mit dem Ventileinlass in Verbindung stehen. Der Ventilkörper sperrt in den beiden Endstellungen die Verbindung des Ventileinlasses zu jeweils einem der beiden Ventilauslässe ab und gibt die Verbindung zum anderen Ventilauslass frei. Dazu wirkt er in den Endstellungen mit einem jeweiligen Ventilsitz zusammen. Das Umstellventil ist dafür eingerichtet, auf den Ventilkörper wenigstens in einer der beiden Endstellungen durch im Sanitärwasser-Ventilraum anstehenden Sanitärwasserdruck eine Kraft in Schließrichtung auszuüben. Des Weiteren beinhaltet das Umstellventil eine hydraulische Dämpfungseinrichtung, welche die Bewegung der Ventilstange mit dem Ventilkörper wenigstens in einem Teilabschnitt ihres Bewegungsweges zwischen den beiden Endstellungen dämpft.

Umstellventile dieser Art werden beispielsweise in Badewannenarmarturen eingesetzt, um Mischwasser, das von der Armatur aus zugeführtem Kaltwasser und Warmwasser gebildet wird, wahlweise einem Wannenauslauf oder einem Brausenanschluss z. B. für eine Handbrause zuzuführen.

Der Benutzer kann die Umschaltung des Ventils von der einen in die andere Endstellung durch Betätigen der Ventilstange bewirken. Eine der beiden Endstellungen bildet üblicherweise eine Ausgangsstellung, in der die Ventilstange mit dem Ventilkörper durch eine Vorspanneinrichtung, z. B. eine Schraubendruckfeder, vorgespannt in einem zugehörigen Ventilgehäusekörper gehalten wird. Bei einer Wannenarmatur entspricht diese Ausgangsstellung typischerweise der Stellung mit abgesperrtem Brauseanschluss und freigegebenem Wannenauslauf. Der Ventilgehäusekörper definiert, d. h. umgrenzt, den Sanitärwasser-Ventilraum, worunter vorliegend derjenige Hohlraum im Ventil zu verstehen ist, in den das über den Ventileinlass zugeführte Wasser gelangen kann. Solange dem Umstellventil Wasser zugeführt wird, wird es durch dessen Fluiddruck in seiner jeweiligen Endstellung oder wenigstens in einer der beiden Endstellungen gehalten. Wenn die Wasserzufuhr abgesperrt wird und dadurch der Fluiddruck im Sanitärwasser-Ventilraum abfällt, nimmt die Ventilstange mit ihrem Ventilkörper die durch die Vorspanneinrichtung festgelegte Endstellung ein. Da der Sanitärwasserdruck den Ventilkörper in der Nähe der Endstellung in die Richtung der Endstellung drückt, besteht eine bekannte Problematik dieser Umstellventile darin, dass beim Umschalten ein relativ lautes, schlagartiges Geräusch auftreten kann, der sogenannte Wasserschlageffekt, wenn der Ventilkörper unterstützt vom Fluiddruck gegen den betreffenden Ventilsitz anschlägt.
Als Abhilfe sind bereits verschiedentlich hydraulische Dämpfungseinrichtungen vorgeschlagen worden, welche die Bewegung der Ventilstange mit dem Ventilkörper wenigstens in einem Teilabschnitt ihres Bewegungsweges zwischen den beiden Endstellungen dämpfen, so dass die Auftreffgeschwindigkeit des Ventilkörpers auf den Ventilsitz und somit auch die damit einhergehende Geräuschentwicklung reduziert wird. Die hydraulischen Dämpfungseinrichtungen von Umstellventilen, wie sie in der Gebrauchsmusterschrift DE 72 42 544 U und den Offenlegungsschriften DE 195 42 748 A1 und WO 2007/048525 A1 offenbart sind, beinhalten einen Dämpfungsraum, der Teil des Sanitärwasser-Ventilraums ist, d. h. mit diesem in Fluidverbindung steht. Durch die Verstellbewegung der Ventilstange wird das Volumen des Dämpfungsraums verändert, und die Fluidverbindung ist derart gedrosselt, dass mit ihr die Dämpfungswirkung bereitgestellt wird. Beim Ventil der DE 72 42 544 U dient dazu ein mit Drosselbohrungen oder dergleichen versehener Dämpfungskolben. Beim Ventil der WO 2007/048525 A1 beinhaltet die Fluidverbindung eine mit einer Drossel versehene Axialbohrung in der Ventilstange. Beim Ventil der DE 195 42 748 A1 fungiert eine stirnseitig offene Bohrung vorne an der Ventilstange als Dämpfungsraum, in den ein gehäuseseitig fest angeordneter Kolben eingreift, der mit einem Drosselschlitz versehen ist.

Weitere herkömmliche Ventile mit hydraulischen Dämpfungseinrichtungen sind in den Offenlegungsschriften DE 41 05 166 A1, US 2006/0208209 A1, EP 1 072 833 A1 und WO 2011/155907 A1 und in der Gebrauchsmusterschrift DE 296 08 014 U1 offenbart.
Die Verwendung hydraulischer Dämpfungseinrichtungen ist gegenüber alternativen, nicht-hydraulisch wirkenden Dämpfungseinrichtungen hinsichtlich Funktionalität und Aufwand durchaus vorteilhaft, bei den oben erwähnten herkömmlichen Umschaltventilen ergeben sich jedoch Auslegungs-/Konstruktionsbeschränkungen für den Aufbau des Ventils, da der Dämpfungsraum als geeigneter Teil des Sanitärwasser-Ventilraums auszubilden ist und eine gedrosselte Fluidverbindung zum restlichen Sanitärwasser-Ventilraum haben muss. Zudem besteht bei diesen bekannten Umstellventilen generell die Schwierigkeit, dass die Dämpfungswirkung von den Druckverhältnissen des dem Ventil zugeführten Sanitärwassers abhängt, das bei diesen Ventilen als Dämpfungsfluid fungiert. Der Erfindung liegt als technisches Problem die Bereitstellung eines sanitären Umstellventils der eingangs genannten Art zugrunde, bei dem die oben erwähnten Problempunkte bekannter Umstellventile in vorteilhafter Weise beseitigt oder jedenfalls abgemildert sind.
Die Erfindung löst dieses Problem durch die Bereitstellung eines sanitären Umstellventils mit den Merkmalen des Anspruchs 1. Bei diesem Umstellventil weist die hydraulische Dämpfungseinrichtung einen vom Sanitärwasser-Ventilraum fluidgetrennten Dämpfungsfluidraum auf. Dies bedeutet, dass beim erfindungsgemäßen Umstellventil die hydraulische Dämpfungseinrichtung über ein vom Sanitärwasser unabhängiges, eigenes Dämpfungsfluid verfügt. Auf diese Weise ist die Wasserführung des Sanitärwassers, d. h. des für den jeweiligen Sanitärzweck dienenden Nutzwassers, im Ventil vollständig von der Führung des die Dämpfung bereitstellenden Dämpfungsfluids unabhängig. Die Gestaltung des Sanitärwasser-Ventilraums kann frei von der Dämpfungsfunktionalität allein auf die Anfordernisse der Sanitärwasserführung vom Ventileinlass wahlweise zum jeweiligen Ventilauslass konfiguriert werden. Ebenso kann die hydraulische Dämpfungseinrichtung frei von der Sanitärwasserführung allein auf die Erzielung der gewünschten Dämpfungswirkung hin konfiguriert werden. Hierfür besteht u.a. völlige Freiheit hinsichtlich der Wahl eines für den jeweiligen Anwendungszweck am besten geeigneten Dämpfungsfluids. Gleichzeitig werden die bekannten Vorteile hydraulischer Dämpfungseinrichtungen beibehalten, wie sie von den oben erwähnten herkömmlichen Umstellventilen an sich bekannt sind.

Des Weiteren weist das Umstellventil eine Vorspanneinrichtung auf, welche die Ventilstange mit dem Ventilkörper in Richtung einer der beiden Endstellungen vorspannt. Damit lässt sich diese von herkömmlichen Umstellventilen an sich bekannte Maßnahme mit den entsprechenden Vorteilen auch beim erfindungsgemäßen Umstellventil verwirklichen. Die Dämpfungseinrichtung ist dafür ausgelegt, in einem an die nicht vorgespannte Endstellung anschließenden Bewegungsabschnitt der Ventilstange eine höhere Dämpfungskraft bereitzustellen als in einem an die vorgespannte Endstellung anschließenden Bewegungsabschnitt der Ventilstange. Mit der höheren Dämpfungskraft wird der die unerwünschte Geräuschentwicklung verursachende Wasserschlageffekt unterdrückt. Die geringere oder fehlende Dämpfungskraft im übrigen Bewegungsabschnitt der Ventilstange macht es möglich, dass die Ventilbetätigungskraft für den Benutzer durch die Dämpfungseinrichtung nicht oder jedenfalls nicht merklich erhöht wird.

In einer Weiterbildung der Erfindung umfasst die Dämpfungseinrichtung einen den Dämpfungsfluidraum definierenden Dämpfungszylinder und einen darin axial beweglichen Dämpfungskolben. Dies stellt eine an sich bekannte Realisierung einer hydraulischen Dämpfungseinrichtung dar, so dass zur Realisierung an sich bekannte Gestaltungen genutzt werden können. Der Dämpfungskolben oder der Dämpfungszylinder ist axial bewegungsstarr mit der Ventilstange gekoppelt, das jeweils andere Bauteil ist axial bewegungsstarr mit einem Ventilgehäuse gekoppelt. In einer Ausgestaltung dieser Realisierungsvariante umgibt der Dämpfungskolben die Ventilstange zylinderringförmig. Dazu kann er z. B. fest als Zylinderring auf die Ventilstange aufgesetzt oder an ihr einstückig angeformt sein. In weiterer Ausgestaltung weist der zylinderringförmige Kolben mindestens eine sich axial durch ihn hindurch erstreckende Drosselöffnung und/oder mindestens einen axialen Drosselschlitz auf. Mit der Dimensionierung der einen oder mehreren Drosselöffnungen und/oder Drosselschlitze lässt sich die Dämpfungswirkung in gewünschter Weise steuern.

In entsprechenden Weiterbildungen der Erfindung ist der Dämpfungszylinder einstückig mit einem den Sanitärwasser-Ventilraum definierenden Ventilgehäusekörper ausgebildet oder als separates Bauteil an diesem angebracht. Je nach Einsatzzweck des Umstellventils kann die eine oder die andere Realisierungsvariante von Vorteil sein. In weiterer Ausgestaltung steht der Dämpfungszylinder wenigstens teilweise axial über eine Bedienseite des übrigen Ventilgehäusekörpers hinaus vor. In diesem Fall wird folglich ein in Richtung Betätigungsseite vor dem übrigen Ventilgehäusekörper liegender Abschnitt der Ventilstange zum Anordnen bzw. Unterbringen der Dämpfungseinrichtung genutzt.

In einer Weiterbildung der Erfindung ist der Dämpfungszylinder auf einem Teil seiner axialen Verschiebungslänge für den Dämpfungskolben innenseitig mit einer dämpfungsreduzierenden Überströmkanalstruktur versehen. Durch diese Überströmkanalstruktur lässt sich ein entsprechender Abschnitt des Ventilstangen-Bewegungsweges so auslegen, dass die Ventilstangenbewegung in diesem Abschnitt weniger stark gedämpft wird oder von der Dämpfungswirkung der Dämpfungseinrichtung gänzlich freigehalten wird.

Vorteilhafte Ausführungsformen der Erfindung sind in den Zeichnungen dargestellt und werden nachfolgend beschrieben. Hierbei zeigen:
- Fig. 1: eine Teillängsschnittansicht eines sanitären Umstellventils mit an einem Ventilgehäuse montierter hydraulischer Dämpfungseinrichtung,
- Fig. 2: eine Detailansicht eines Bereichs II von Figur 1,
- Fig. 3: eine Teillängsschnittansicht entsprechend Figur 1 für eine Variante mit einteilig am Ventilgehäuse integrierter hydraulischer Dämpfungseinrichtung und
- Fig. 4: eine Detailansicht eines Bereichs IV von Figur 3.

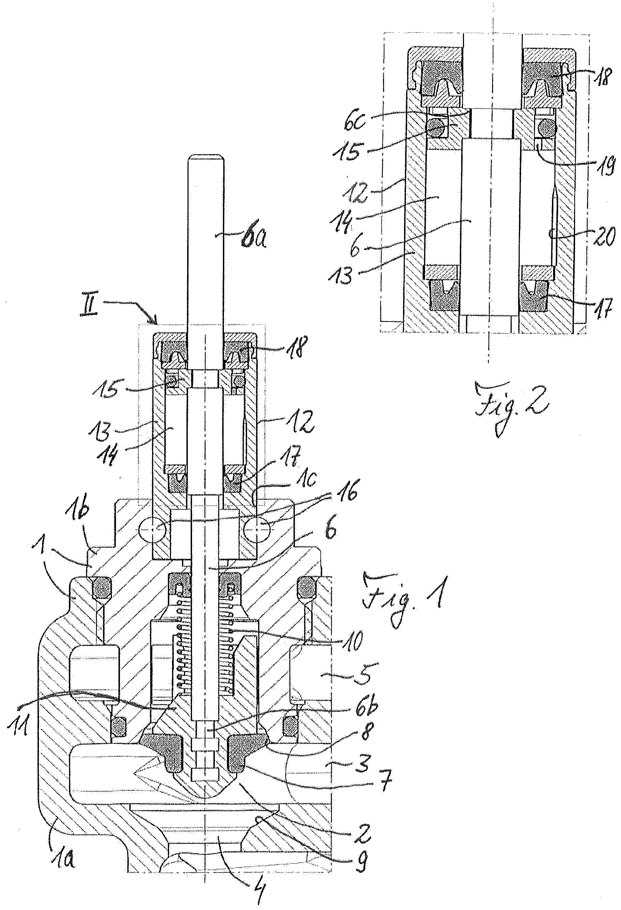

Das in Fig. 1 mit seinem hier interessierenden Teil dargestellte sanitäre Umstellventil weist einen Ventilgehäusekörper 1 auf, der aus einem Gehäuseunterteil 1a und einem daran fluiddicht angebrachten Gehäuseoberteil 1b zusammengesetzt ist. Das Ventilgehäuse 1 definiert einen Sanitärwasser-Ventilraum 2 mit einem an eine Sanitärwasserversorgung anzuschließenden Ventileinlass 3 sowie mit einem ersten Ventilauslass 4 und einem zweiten Ventilauslass 5, die über den Sanitärwasser-Ventilraum 2 strömungstechnisch parallel mit dem Ventileinlass 3 in Verbindung stehen. Das gezeigte Umstellventil kann z. B. bei einer Badewannenarmatur verwendet werden, wobei dann der Ventileinlass 3 an eine Mischwasserversorgung der Armatur angeschlossen wird. Die Armatur stellt das Mischwasser in üblicher Weise durch steuerbares Mischen von Kaltwasser aus einem Kaltwasseranschluss und Warmwasser aus einem Warmwasseranschluss bereit. Der erste Ventilauslass 4 dient dann z. B. der Zuführung des Mischwassers zu einem Brausenanschluss z. B. für eine Handbrause, während der zweite Ventilauslass 5 dazu dient, das Mischwasser einem Wannenauslauf zuzuführen.

Im Ventilgehäuse 1 ist axial beweglich eine Ventilstange 6, auch Ventilstößel genannt, gehalten, wobei sich die Ventilstange 6 mit einem bedienseitigen Endabschnitt 6a aus dem Ventilgehäuse 1 heraus erstreckt. Mit ihrem anderen Endbereich 6b ragt sie in den Sanitärwasser-Ventilraum 2 und trägt einen an ihr bewegungsstarr fixierten Ventilkörper 7, auch Ventilschließkörper genannt.

Der Ventilkörper 7 wirkt mit zwei axial beabstandet gegenüberliegenden Ventilsitzen 8, 9 zusammen. Über den bedienseitigen Endabschnitt 6a ist die Ventilstange 6 axial beweglich handbetätigbar, d. h. sie kann von einem Benutzer axial in Richtung in das Ventilgehäuse 1 hinein vorgeschoben bzw. in der entgegengesetzten Richtung zurückgezogen werden. Die Ventilstange 6 ist dabei axial zwischen einer ersten und einer zweiten Endstellung beweglich, die den beiden Positionen des Ventilkörpers 7 entsprechen, in denen dieser gegen den einen Ventilsitz 8 oder den anderen Ventilsitz 9 anliegt.

In der in Fig. 1 gezeigten Stellung liegt der Ventilkörper 7 gegen den Ventilsitz 8 an und sperrt dadurch die Fluidverbindung des Ventileinlasses 3 zum zweiten Ventilauslass 5 ab, während er die Fluidverbindung vom Einlass 3 zum zweiten Ventilauslass 4 freigibt. In der nicht gezeigten, anderen Endstellung liegt der Ventilkörper 7 gegen den anderen Ventilsitz 9 an und sperrt dadurch die Fluidverbindung vom Ventileinlass 3 zum zweiten Ventilauslass 4 ab, während er die Fluidverbindung vom Einlass 3 zum zweiten Ventilauslass 5 freigibt.

Wenn das Umstellventil mit seinem Ventileinlass 3 an eine Sanitärwasserversorgung angeschlossen und diese Versorgung aktiviert bzw. geöffnet/freigegeben ist, wirkt der im Sanitärwasser-Ventilraum 2 dadurch herrschende Fluiddruck, d. h. der Druck des über den Einlass 3 zugeführten sanitären Nutzwassers, auf den Ventilkörper 7 in Schließrichtung, wenn sich der Ventilkörper 7 in der gezeigten Stellung in Anlage gegen den Ventilsitz 8 befindet. Der Ventilkörper 7 wird dadurch vom Sanitärwasserdruck im Sanitärwasser-Ventilraum 2 in dieser gezeigten Endstellung gehalten.

Wenn der Benutzer das Umstellventil in seine andere, nicht gezeigte Position umstellen will, drückt er die Ventilstange 6 gegen den Sanitärwasserdruck axial nach vorn, d. h. weiter in das Ventilgehäuse 1 hinein, bis der Ventilkörper 7 gegen den anderen Ventilsitz 9 zur Anlage kommt. Diese nicht gezeigte Ventilendstellung bildet eine Ausgangsstellung des Ventils, in der sich das Ventil befindet, wenn der Ventileinlass 3 nicht an eine Wasserversorgung angeschlossen ist oder diese Wasserversorgung abgesperrt wird bzw. geschlossen ist. Das Ventil gelangt auch selbsttätig aus der gezeigten Endstellung in die nicht gezeigte Ausgangsstellung, wenn die Wasserversorgung abgesperrt wird und der Sanitärdruck hierdurch abfällt. Dazu weist das Ventil eine Vorspanneinrichtung auf, die im gezeigten Ausführungsbeispiel durch eine Schraubendruckfeder 10 realisiert ist, welche die Ventilstange 6 umgibt und sich axial einerseits am Gehäuseoberteil 1b und andererseits an der Ventilstange 6 bzw. am Ventilkörper 7 oder einem mit der Ventilstange 6 verbundenen Abstützelement 11 abstützt. Bei fehlendem Sanitärwasserdruck drückt die Vorspanneinrichtung 10 die Ventilstange 6 mit ihrem Ventilkörper 7 in Anlage gegen den Ventilsitz 9. Optional ist der Ventilkörper 7 zudem so gestaltet, dass im Sanitärwasser-Ventilraum 2 anstehender Sanitärwasserdruck auch dann eine Druckkraft in Schließrichtung auf den Ventilkörper 7 ausübt, wenn sich dieser in der nicht gezeigten Endstellung in Anlage am anderen Ventilsitz 9 befindet. Aus der nicht gezeigten Endstellung kann der Benutzer das Ventil durch axiales Ziehen an der Ventilstange 6 gegen die Kraft der Vorspanneinrichtung 10 und gegebenenfalls gegen die Sanitärwasserdruckkraft herausbewegen und in die gezeigte Endstellung mit dem Ventilkörper 7 in Anlage gegen den Ventilsitz 8 bringen.

Um bei den geschilderten Umschaltvorgängen den eingangs erwähnten Wasserschlageffekt und die damit verbundene unerwünschte Geräuschentwicklung zu unterdrücken, weist das gezeigte Umstellventil eine hydraulische Dämpfungseinrichtung 12 auf, die zusätzlich in der Detailansicht von Fig. 2 dargestellt ist. Wie daraus ersichtlich, beinhaltet diese Dämpfungseinrichtung einen Dämpfungszylinder 13, der einen Dämpfungsfluidraum 14 definiert, d. h. umgrenzt, und einen in dem Dämpfungsfluidraum 14 axial beweglichen Dämpfungskolben 15, der axial bewegungsstarr mit der Ventilstange 6 gekoppelt ist. Dazu ist er im gezeigten Beispiel als Zylinderringkolben ausgeführt und in einer radialen Umfangsnut 6c der Ventilstange 6 gehalten. Der Dämpfungszylinder 13 ist an einer Axialseite in eine korrespondierende axiale Aufnahmebohrung 1c an der Oberseite des Gehäuseoberteils 1b eingefügt und mittels Haltestiften 16 daran fixiert, die in Querbohrungen eingefügt sind, welche durch jeweils korrespondierende halbrunde Ausnehmungen am Gehäuseoberteil 1b einerseits und am Dämpfungszylinder 13 andererseits ausgebildet sind.

Der Dämpfungszylinder 13 steht mit einem den Dämpfungsfluidraum 14 definierenden Teil über das Gehäuseoberteil 1b hinaus in Richtung Bedienabschnitt 6a der Ventilstange 6 vor. Im Ventilgehäuse 1 braucht daher kein zusätzlicher Platz zur Unterbringung des Dämpfungsfluidraums 14 geschaffen werden. Der Dämpfungsfluidraum 14 bildet eine Ringkammer zwischen der Zylinderwand des Dämpfungszylinders 13 und der axial durch den Dämpfungszylinder 13 hindurchgeführten Ventilstange 6. In diesem Ringraum 14 kann sich der Ringkolben 15 bewegen. Der Dämpfungsfluidraum 14 ist an den axialen Stirnseiten mittels üblicher Ringdichtungen 17, 18 fluiddicht nach außen abgedichtet. Dies bedeutet auch, dass der Dämpfungsfluidraum 14 vom Sanitärwasser-Ventilraum 2 vollständig fluidgetrennt ist. Dementsprechend fungiert das über den Ventileinlass 3 zugeführte sanitäre Nutzwasser auch nicht als Dämpfungsfluid. Vielmehr ist der Dämpfungsfluidraum 14 mit einem eigenen Dämpfungsfluid befüllt, wofür irgendeines der hierfür herkömmlich bekannten Dämpfungsfluide verwendet werden kann.

Der Dämpfungskolben 15 teilt den Dämpfungsfluidraum 14 fluiddicht in zwei Teilräume auf, deren Volumen sich durch die Axialbewegung der Ventilstange 6 und damit des Dämpfungskolbens 15 ändert. Der Dämpfungskolben 15 weist eine oder mehrere sich axial durch ihn hindurch erstreckende Drosselöffnungen 19 auf. Durch diese eine oder mehrere Drosselöffnungen 19 hindurch kann das Dämpfungsfluid vom einen zum anderen der beiden Dämpfungsringkammer-Teilräume strömen. Die zugehörige Durchströmrate begrenzt die mögliche Geschwindigkeit der Volumenänderung der beiden über den Dämpfungskolben 15 getrennten Teilräume der Dämpfungsringkammer 14, wodurch die Dämpfungswirkung für die Axialbewegung der Ventilstange 6 mit dem Ventilkörper 7 bereitgestellt wird. Die Dämpfungswirkung bzw. Dämpfungskraft lässt sich durch entsprechende Auslegung/Dimensionierung von Größe und Anzahl der Drosselöffnungen 19 auf ein gewünschtes Maß einstellen. Alternativ oder zusätzlich kann der Dämpfungskolben 15 mit einem oder mehreren sich axial an seinem Außenumfang erstreckenden Drosselschlitzen versehen sein.

Beim gezeigten Umstellventil ist die Dämpfungswirkung zur Vermeidung des Wasserschlageffektes insbesondere für das Umstellen des Ventils in die gezeigte Stellung erwünscht, in welcher der Ventilkörper 7 gegen den Ventilsitz 8 zur Anlage kommt. Wenn dazu der Ventilkörper 7 bei aktiver Sanitärwasserzufuhr über den Ventileinlass 3 aus seiner anderen Endlage am Ventilsitz 9 herausbewegt wird, indem der Benutzer die Ventilstange 6 durch Betätigen am Ventilabschnitt 6a axial zurückzieht, beginnt der Sanitärwasserdruck im Sanitärwasser-Ventilraum 2 sehr rasch, nachdem der Ventilkörper 7 den Ventilsitz 9 verlassen hat, die Bewegung des Ventilkörpers 7 in Richtung des Ventilsitzes 8 zu unterstützen und ihn in diese Richtung zu drücken. Die Dämpfungseinrichtung 12 verhindert nun durch ihre Dämpfungswirkung, dass der Ventilkörper 7 mit hoher Geschwindigkeit gegen den Ventilsitz 8 anschlägt.

Für die entgegengesetzte Umstellbewegung des Ventilkörpers 7 von seiner Anlage am Ventilsitz 8 in seine Anlage am Ventilsitz 9 ist die Fluiddruckwirkung konstruktionsbedingt deutlich geringer und damit auch der entsprechende Wasserschlageffekt. Es wird deshalb für diese Bewegung keine oder jedenfalls keine so große Dämpfungswirkung benötigt wie für das Umstellen in die Endlage des Ventilkörpers 7 gegen den Ventilsitz 8. Dem trägt die Dämpfungseinrichtung 12 im gezeigten Ausführungsbeispiel dadurch Rechnung, dass der Dämpfungszylinder 13 auf einem entsprechenden Teil seiner axialen Verschiebungslänge für den Dämpfungskolben 15 innenseitig mit einer dämpfungsreduzierenden Überströmkanalstruktur versehen ist, die hier durch eine oder mehrere Axialnuten 20 gebildet ist. Im gezeigten Beispiel erstrecken sich diese eine oder mehrere Axialnuten 20 vom unteren Stirnende des Dämpfungsfluidraums 14, das der Endlage des Ventilkörpers 7 am Ventilsitz 9 entspricht, bis etwa zur axialen Mitte des Dämpfungsfluidraums 14. Dementsprechend liegt für den Bewegungsweg des Ventilkörpers 7 vom Ventilsitz 9 bis etwa zur Mittenlage zwischen den beiden Ventilsitzen 8, 9 eine verringerte Dämpfungswirkung durch die Dämpfungseinrichtung 12 vor, da in diesem Teil des Bewegungsweges das Dämpfungsfluid nicht nur durch die einen oder mehreren Drosselöffnungen 19 hindurch vom einen in den anderen Dämpfungsfluid-Teilraum strömen kann, sondern auch durch die Überströmkanalstruktur 20 radial außen am Dämpfungskolben 15 vorbei. Je nach Auslegung/Dimensionierung der Überströmkanalstruktur 20 kann in diesem Bereich völlig auf eine Dämpfungskraft verzichtet werden, oder es wird eine reduzierte Dämpfungskraft eingestellt, die in vorgebbarem Maß niedriger ist als die Dämpfungskraft im anderen Bewegungsabschnitt, der an die Endlage des Ventilkörpers 7 gegen den Ventilsitz 8 angrenzt. Somit ist beim Umstellventil der Fig. 1 und 2 die Dämpfungseinrichtung 12 dafür ausgelegt, in demjenigen Bewegungsabschnitt der Ventilstange 6, der sich an die nicht durch die Vorspanneinrichtung 10 vorgespannte Endstellung anschließt, in welcher der Ventilkörper 7 gegen den Ventilsitz 8 anliegt, eine höhere Dämpfungskraft bereitzustellen als in dem an die vorgespannte Endstellung, in welcher der Ventilkörper 7 gegen den Ventilsitz 9 anliegt, anschließenden Bewegungsabschnitt der Ventilstange 6.

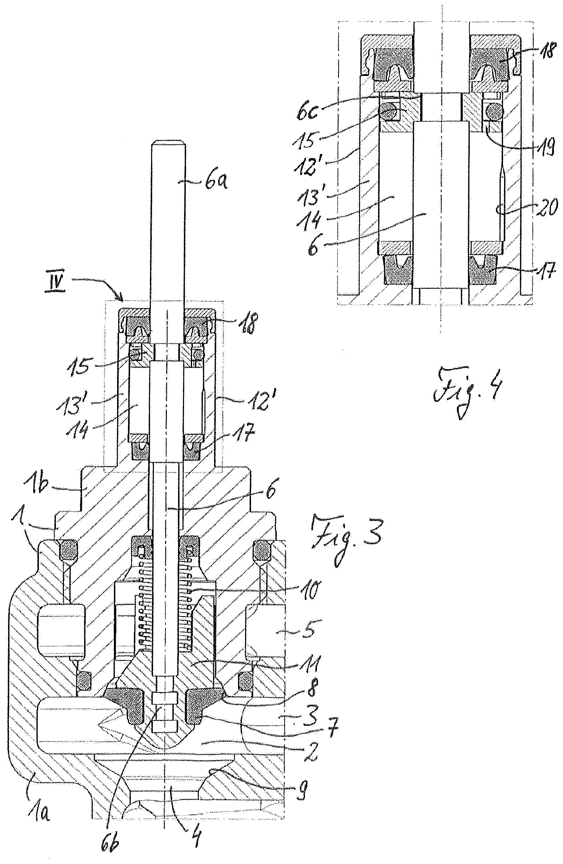

Die Fig. 3 und 4 veranschaulichen eine Variante des Umstellventils der Fig. 1 und 2, wobei der Übersichtlichkeit halber für identische und funktionell äquivalente Komponenten gleiche Bezugszeichen verwendet sind, so dass insoweit auf die obigen Erläuterungen zum Umstellventil der Fig. 1 und 2 verwiesen werden kann. Das in den Fig. 3 und 4 gezeigte Umstellventil besitzt die gleichen Funktionen und Vorteile, wie sie oben zum Umstellventil der Fig. 1 und 2 angegeben sind, und unterscheidet sich davon lediglich durch eine modifizierte hydraulische Dämpfungseinrichtung 12', deren Dämpfungszylinder 13' einstückig mit dem Ventilgehäuse 1 realisiert ist. Speziell ist der Dämpfungszylinder 13' als zylindrischer Fortsatz am Gehäuseoberteil 1b ausgebildet, der sich von dessen Bedienseite, d. h. von der in Fig. 3 oberen Seite, in Richtung Bedienabschnitt 6a der Ventilstange 6 erstreckt.
Der übrige Aufbau der Dämpfungseinrichtung 12' beim Umstellventil der Fig. 3 und 4 entspricht vollständig demjenigen der Dämpfungseinrichtung 12 beim Umstellventil der Fig. 1 und 2, so dass sich auch die gleichen Dämpfungsfunktionen und daraus resultierenden Vorteile ergeben wie im Beispiel der Fig. 1 und 2.
Wie die gezeigten und oben erläuterten Ausführungsbeispiele deutlich machen, stellt die Erfindung ein sanitäres Umstellventil zur Verfügung, bei der die hydraulische Dämpfungseinrichtung einen vom Sanitärwasser-Ventilraum fluidgetrennten Dämpfungsfluidraum aufweist, so dass der Dämpfungsfluidraum mit einem vom sanitären Nutzwasser getrennten und unabhängigen Dämpfungsfluid befüllt sein kann. Die hydraulische Dämpfungseinrichtung kann auf diese Weise vollkommen unabhängig von der Gestaltung des Sanitärwasser-Ventilraums und vom darin herrschenden Sanitärwasserdruck auf die Erzielung einer gewünschten Dämpfungscharakteristik ausgelegt werden, einschließlich der Wahl eines vom Sanitärwasser verschiedenen Dämpfungsfluids. Außerdem kann die Gestaltung des Sanitärwasser-Ventilraums allein auf die Erzielung gewünschter Strömungsverhältnisse für das über den Ventileinlass zugeführte Sanitärwasser und dessen wahlweiser Zuführung zum ersten oder zweiten Ventilauslass ausgelegt werden, ohne dass dabei ein vom Sanitärwasser beaufschlagter Dämpfungsraum vorzusehen ist. Der Dämpfungsfluidraum und mit ihm die hydraulische Dämpfungseinrichtung können folglich an einer geeigneten Stelle außerhalb des Sanitärwasser-Ventilraums angeordnet werden. Dazu bietet sich z. B., wie in den gezeigten Ausführungen, ein bedienseitig vor dem übrigen Ventilgehäuse liegender Ventilstangenabschnitt an. Für das Ventilgehäuse lässt sich in diesem Fall auf Wunsch praktisch unverändert eine Bauweise verwenden, wie sie für Umstellventile ohne Dämpfungseinrichtung bekannt ist.

Das erfindungsgemäße Umstellventil lässt sich nicht nur, wie erwähnt, in Badewannearmaturen einsetzen, sondern auch in beliebigen anderen Sanitäranwendungen, bei denen Bedarf an einem Ventil besteht, mit dem ein zugeführtes Fluid wahlweise einem von mehreren Ventilauslässen zugeführt werden soll. In den gezeigten Ausführungsbeispielen beinhaltet das Umstellventil zwei Ventilauslässe, in alternativen Ausführungsformen der Erfindung umfasst die Erfindung auch Umstellventile mit mehr als zwei Ventilauslässen, zwischen denen ein Benutzer durch die Ventilstangenbetätigung umschalten kann.

## Patentansprüche

1. Sanitäres Umstellventil mit
- einer axial zwischen einer ersten und einer zweiten Endstellung handbetätigbar beweglichen Ventilstange (6) mit einem an ihr angeordneten Ventilkörper (7),
- einem Sanitärwasser-Ventilraum (2) mit einem an eine Sanitärwasserversorgung anzuschließenden Ventileinlass (3) sowie mit einem ersten und einem zweiten Ventilauslass (4, 5), die strömungstechnisch parallel mit dem Ventileinlass in Verbindung stehen,
- wobei der Ventilkörper in den beiden Endstellungen die Verbindung des Ventileinlasses zu jeweils einem der beiden Ventilauslässe absperrt und zum anderen Ventilauslass freigibt und
- wobei das Umstellventil dafür eingerichtet ist, auf den Ventilkörper wenigstens in einer der beiden Endstellungen durch im Sanitärwasser-Ventilraum anstehenden Sanitärwasserdruck eine Kraft in Schließrichtung auszuüben, und
- einer hydraulischen Dämpfungseinrichtung (12, 12'), welche die Bewegung der Ventilstange mit dem Ventilkörper wenigstens in einem Teilabschnitt ihres Bewegungsweges zwischen den beiden Endstellungen dämpft,
- einer Vorspanneinrichtung (10), welche die Ventilstange (6) mit dem Ventilkörper (7) in Richtung einer der beiden Endstellungen vorspannt,
**dadurch gekennzeichnet, dass**
- die hydraulische Dämpfungseinrichtung einen vom Sanitärwasser-Ventilraum fluidgetrennten Dämpfungsfluidraum (14) aufweist und dafür ausgelegt ist, in einem an die nicht vorgespannte Endstellung anschließenden Bewegungsabschnitt der Ventilstange eine höhere Dämpfungskraft bereitzustellen als in einem an die vorgespannte Endstellung anschließenden Bewegungsabschnitt der Ventilstange.

2. Sanitäres Umstellventil nach Anspruch 1, weiter **dadurch gekennzeichnet,**
**dass** die Dämpfungseinrichtung einen den Dämpfungsfluidraum definierenden Dämpfungszylinder (13, 13') und einen in ihm axial beweglichen Dämpfungskolben (15) umfasst, wobei von dem Dämpfungszylinder und dem Dämpfungskolben das eine Teil axial bewegungsstarr mit der Ventilstange und das andere Teil axial bewegungsstarr mit einem Ventilgehäuse gekoppelt sind.

3. Sanitäres Umstellventil nach Anspruch 2, weiter **dadurch gekennzeichnet, dass** der Dämpfungskolben axial bewegungsstarr mit der Ventilstange gekoppelt ist und diese zylinderringförmig umgibt.

4. Sanitäres Umstellventil nach Anspruch 2 oder 3, weiter **dadurch gekennzeichnet, dass** der Dämpfungskolben mindestens eine sich axial durch ihn hindurch erstreckende Drosselöffnung (19) und/oder mindestens einen axialen Drosselschlitz aufweist.

5. Sanitäres Umstellventil nach einem der Ansprüche 2 bis 4, weiter **dadurch gekennzeichnet, dass** der Dämpfungszylinder einstückig mit einem den Sanitärwasser-Ventilraum definierenden Ventilgehäusekörper (1) ausgebildet oder als separates Bauteil an diesem angebracht ist.

6. Sanitäres Umstellventil nach Anspruch 5, weiter **dadurch gekennzeichnet, dass** der Dämpfungszylinder wenigstens teilweise axial über eine Bedienseite des übrigen Ventilgehäusekörpers hinaus vorsteht.

7. Sanitäres Umstellventil nach einem der Ansprüche 2 bis 6, weiter **dadurch gekennzeichnet, dass** der Dämpfungszylinder auf einem Teil seiner axialen Verschiebungslänge für den Dämpfungskolben innenseitig mit einer dämpfungsreduzierenden Überströmkanalstruktur (20) versehen ist.

## Claims

1. Sanitary change-over valve comprising
- a valve rod (6) manually displaceable in axial direction between a first and a second end position with a valve body (7) disposed thereon,
- a sanitary water valve cavity (2) having a valve inlet (3) to be connected to a sanitary water supply and having a first and a second valve outlet (4, 5) in communication to the valve inlet in fluidly parallel manner,
- wherein the valve body in the two end positions blocks the connection of the valve inlet to a respective one of the two valve outlets and enables it to the other valve outlet, and
- wherein the change-over valve is configured to exert a force in the closing direction on the valve body in at least one of the two end positions by sanitary water pressure present in the sanitary water valve cavity,
- a hydraulic damper unit (12, 12') damping the movement of the valve rod with the valve body at least in a partial section of the movement path of the rod between the two end positions, and
- a biasing device (10) to bias the valve rod (6) with the valve body (7) in the direction of one of the two end positions,
**characterized in that**
- the hydraulic damper unit comprises a damper fluid cavity (14) in fluidic separation from the sanitary water valve cavity and is configured to provide a higher damping force in a movement section of the valve rod subsequent to the non-biased end position than in a movement section of the valve rod subsequent to the biased end position.

2. Sanitary change-over valve according to claim 1, further **characterized in that** the damper unit comprises a damper cylinder (13, 13') defining the damper fluid cavity and a damper piston (15) axially displaceable in the cylinder, wherein of the damper cylinder and of the damper piston the one part is rigidly coupled to the valve rod with respect to axial movement and the other part is rigidly coupled to a valve housing with respect to axial movement.

3. Sanitary change-over valve according to claim 2, further **characterized in that** the damper piston is rigidly coupled to the valve rod with respect to axial movement and surrounds the valve rod in a cylinder ring shape.

4. Sanitary change-over valve according to claim 2 or 3, further **characterized in that** the damper piston comprises at least one throttle orifice (19) axially traversing the damper piston and/or at least one axial throttle slot.

5. Sanitary change-over valve according to any one of the claims 2 to 4, further **characterized in that** the damper cylinder is formed integrally with a valve housing body (1) defining the sanitary water valve cavity or is mounted to the valve housing body as a separate component.

6. Sanitary change-over valve according to claim 5, further **characterized in that** the damper cylinder at least partially protrudes axially over an operating side of the remaining valve housing body.

7. Sanitary change-over valve according to any one of the claims 2 to 6, further **characterized in that** the damper cylinder is provided at its interior with an absorption reducing bypass channel structure (20) on part of its axial displacement length for the damper piston.

## Revendications

1. Valve de commutation sanitaire, comportant
- une tige de valve (6) mobile axialement par actionnement manuel entre une première et une seconde position de fin de course et comportant un corps de valve (7) agencé sur celle-ci,
- une chambre de valve (2) d'eau sanitaire, comportant une entrée de valve (3) à raccorder à l'alimentation en eau sanitaire ainsi qu'une première et une seconde sortie de valve (4, 5), qui sont en liaison fluidique en parallèle avec l'entrée de valve,
dans laquelle
- dans les deux positions de fin de course, le corps de valve obture la liaison vers l'une des deux sorties de valve respectives et la libère vers l'autre sortie de valve, et
- la valve de commutation est conçue pour exercer une force en direction de fermeture sur le corps de valve, au moins dans l'une des deux positions de fin de course, par une pression d'eau sanitaire qui se présente dans la chambre de valve d'eau sanitaire, et
- un dispositif d'amortissement hydraulique (12, 12') qui amortit le mouvement de la tige de valve avec le corps de valve au moins dans un tronçon partiel de son chemin de mouvement entre les deux positions de fin de course,
- un dispositif de précontrainte (10) qui précontraint la tige de valve (6) avec le corps de valve (7) en direction de l'une des deux positions de fin de course,
**caractérisée en ce que**
- le dispositif d'amortissement hydraulique comprend une chambre à fluide d'amortissement (14) séparée sur le plan fluidique vis-à-vis de la chambre de valve d'eau sanitaire et est conçu pour fournir, pendant une partie du mouvement de la tige de valve qui ne se raccorde pas à la position de fin de course précontrainte, une force d'amortissement supérieure à celle exercée pendant une partie du mouvement de la tige de valve qui se raccorde à la position de fin de course précontrainte.

2. Valve de commutation sanitaire selon la revendication 1,
**caractérisée en outre en ce que**
le dispositif d'amortissement comprend un cylindre d'amortissement (13, 13') qui définit la chambre à fluide d'amortissement et un piston d'amortissement (15) axialement mobile dans celui-ci, et parmi le cylindre d'amortissement et le piston d'amortissement, l'un est couplé solidairement en mouvement axial à la tige de valve et l'autre est couplé solidairement en mouvement axial à un boîtier de valve.

3. Valve de commutation sanitaire selon la revendication 2,
**caractérisée en outre en ce que**
le piston d'amortissement est couplé solidairement en mouvement axial à la tige de valve et entoure celle-ci en forme d'anneau cylindrique.

4. Valve de commutation sanitaire selon la revendication 2 ou 3,
**caractérisée en outre en ce que**
le piston d'amortissement comprend au moins une ouverture d'étranglement (19) qui s'étend axialement à travers celui-ci, et/ou au moins une fente d'étranglement axiale.

5. Valve de commutation sanitaire selon l'une des revendications 2 à 4,
**caractérisée en outre en ce que**
le cylindre d'amortissement est réalisé d'un seul tenant avec un corps de boîtier de valve (1) définissant la chambre de valve d'eau sanitaire, ou est rapporté sur celui-ci en tant que composant séparé.

6. Valve de commutation sanitaire selon la revendication 5,
**caractérisée en outre en ce que**
le cylindre d'amortissement dépasse au moins partiellement axialement au-delà d'un côté de manoeuvre du corps de boîtier de valve restant.

7. Valve de commutation sanitaire selon l'une des revendications 2 à 6,
**caractérisée en outre en ce que**
sur une partie de sa longueur de translation axiale, le cylindre d'amortissement est pourvu du côté intérieur d'une structure formant canal de déversement (20) réduisant l'amortissement pour le piston d'amortissement.
